Europäisches Patentamt

European Patent Office

Office européen des brevets

(11) Veröffentlichungsnummer: **0 299 306 B1**

(12) **EUROPÄISCHE PATENTSCHRIFT**

(45) Veröffentlichungstag der Patentschrift: **04.03.92**

(21) Anmeldenummer: **88110597.7**

(22) Anmeldetag: **02.07.88**

(51) Int. Cl.⁵: **C01B 7/19**, C01F 11/46

(54) Verfahren zur Herstellung von Flusssäure und Anhydrit.

(30) Priorität: **14.07.87 DE 3723197**

(43) Veröffentlichungstag der Anmeldung:
**18.01.89 Patentblatt 89/03**

(45) Bekanntmachung des Hinweises auf die
Patenterteilung:
**04.03.92 Patentblatt 92/10**

(84) Benannte Vertragsstaaten:
**BE DE ES FR GB GR IT NL**

(56) Entgegenhaltungen:
**AU-B- 513 116**
**CH-A- 617 641**
**FR-A- 1 316 980**

**ULLMANNS ENCYKLOPAEDIE DER TECHNI-
SCHEN CHEMIE Band 11, 4. Auflage 1976,
Seiten 599-601, Verlag Chemie
Weinheim/Bergstr.**

(73) Patentinhaber: **BAYER AG**

**W-5090 Leverkusen 1 Bayerwerk(DE)**

(72) Erfinder: **Kaule, Gustav, Dipl.-Ing.
Paul-Klee-Strasse 58
W-5090 Leverkusen 1(DE)**
Erfinder: **Rinkes, Hans, Dr.
Einsteinstrasse 23
W-5000 Köln 80(DE)**
Erfinder: **Stolle, Johann-Peter, Dipl.-Ing.
Kurt-Schumacher-Ring 98
W-5090 Leverkusen 1(DE)**
Erfinder: **Beck, Hans-Joachim, Dr.
Geibelstrasse 4
W-5090 Leverkusen 1(DE)**

## Beschreibung

Die Erfindung betrifft ein Verfahren zur Herstellung von Flußsäure und Anhydrit durch Umsetzung von Flußspat mit Schwefelsäure in mehreren Stufen, wobei die letzte Stufe aus einem indirekt beheizten Drehrohr besteht.

Flußsäure und Anhydrit werden vorwiegend durch Umsetzung von Flußspat und Schefelsäure in mehreren Reaktionsstufen hergestellt. Die letzte Stufe besteht dabei aus einem indirekt beheizten Drehrohr. Verschiedene Varianten dieses Verfahrens sind in Ullmanns Encyclopädie der technischen Chemie, Band 11, 4. Auflage 1976, Seite 599 bis 601, beschrieben.

Die indirekte Beheizung des Drehrohrs ist in der Regel so ausgeführt, daß die Energieübertragung auf das Reaktionsgemisch durch Konvektion erfolgt. Dazu wird in einer separaten Brennkammer ein Heißgas mit einer Temperatur von ca. 500 bis 650 °C erzeugt und in den Heizraum des Drehrohrs geführt. Das Heißgas kein dabei beispielsweise durch Verbrennung von Öl oder Gas erhalten werden.

Der Heizraum besteht aus einem um das Drehrohr koaxial liegenden Stahlrohr, das aus bis zu drei Teilkammern bestehen kann. Zur Vermeidung von Energieverlusten ist das Stahlrohr nach außen isoliert. Da die Energieübertragung durch Konvektion erfolgen soll, wird mit einem Ventilator in dem Heizraum ein Kreisgasstrom von beispielsweise 40 000 bis 80 000 m³/h erzeugt. Es ist üblich, die den Heizraum verlassenden Rauchgase teilweise in die Brennkammer zurückzuleiten und/oder in den von der Brennkammer kommenden Heißgasstrom einzumischen.

In der Regel wird das Drehrohr vom Einlaufende her bis zum Auslaufende von ca. 150 °C bis ca. 300 °C ansteigend beheizt.

Ein wesentlicher Nachteil des beschriebenen Verfahrens ist der sehr hohe Energiebedarf zur Beheizung des Drehrohres, was die Wirtschaftlichkeit des Verfahrens beeinträchtigt. Weitere Nachteile sind die nicht unerhebliche Korrosion des Drehrohrs und eine oft ungleichmäßige Produktqualität des gebildeten Anhydrits.

Aufgabe war es, ein Verfahren zur Herstellung von Flußsäure und Anhydrit zur Verfügung zu stellen, welches wirtschaftlicher als die bisherigen arbeitet und zudem gleichmäßige und gute Produktqualität liefert.

Es wurde nun überraschend gefunden, daß die beschriebenen Nachteile der bisherigen Verfahren weitestgehend vermieden werden können und die Wirtschaftlichkeit der Herstellung von Flußsäure und Anhydrit durch Umsetzung von Flußspat und Schwefelsäure erheblich verbessert wird, wenn dem Drehrohr die zum Beheizen erforderliche Energie im überwiegenden Maße durch Strahlung zugeführt wird.

Gegenstand der Erfindung ist somit ein Verfahren zur Herstellung von Flußsäure und Anhydrit durch Umsetzung von Flußspat mit Schwefelsäure in mehreren Stufen, wobei die letzte Stufe aus einem beheizten Drehrohr besteht, welches dadurch gekennzeichnet ist, daß diesem die zum Beheizen erforderliche Energie im überwiegenden Maße durch Strahlung zugeführt und von mehreren Einzelbrennern erzeugt wird, die längsseitig am Drehrohr angeordnet sind und in einem gemeinsamen Heizraum brennen, der im unteren Bereich als gemauerte Brennkammer ausgebildet ist, und daß jedem Einzelbrenner eine Rauchgasabführung zugeordnet ist und in dieser sowie in dem dazugehörenden Teil der Brennkammer die Temperatur laufend überwacht wird.

Bevorzugt ist dabei ein Verfahren, bei dem die Energie im wesentlichen durch Heißgas- und/oder Festkörperstrahlung auf das Drehrohr übertragen wird. Die Erzeugung der Strahlung kann mit verschiedensten Systemen erfolgen, wobei dazu im Prinzip alle Systeme geeignet sind, die Wärme in Form von Strahlung auf andere Systeme übertragen können.

Die Einzelbrenner können mit unterschiedlichen Brennstoffen, wie beispielsweise Erdgas oder Heizöl, betrieben werden.

Die Einzelbrenner sind bei einem Ofen durchschnittlicher Größe (ca. 15 m Länge und ca. 2,5 m Durchmesser des Drehrohres) in Abständen von 2 bis 3 m installiert.

Das Verfahren gestattet eine ständige Überwachung des Betriebs der Einzelbrenner. Sehr vorteilhaft ist es, wenn jeder Einzelbrenner separat steuerbar ist.

Vorzugsweise ist zusätzlich jeder Einzelbrenner an einen Rechner angeschlossen, der die Temperaturen im Rauchgas und in der Brennkammer überwacht und die den Einzelbrennern zugeführte Brennstoffmenge nach vorgegebenen Temperatursollwerten steuert.

Diese Sollwerte werden von den jeweils gewünschten Energieübertragungs- und Temperaturprofilen bestimmt.

Durch diese Maßnahmen kann der Gesamtenergieverbrauch minimiert werden, wodurch die Wirtschaftlichkeit der Herstellung von Flußsäure mit Schwefelsäure erheblich verbessert wird.

Das erfindungsgemäße Verfahren macht eine Feineinstellung der Energieübertragungs- und Temperaturprofile möglich. Dadurch wird die Bildung von Schmierphasen und die daraus resultierenden Verkustungen und Anbackungen insbesondere im ersten Drittel des Drehrohres vermieden. Dies mindert deutlich die Korrosion im Drehrohr und verbessert die Ausbeute an Flußsäure und Anhydrit. Zudem erzielt man eine gleichmäßigere Produktqualität, insbesondere des Anhydrits.

Das erfindungsgemäße Verfahren soll an einem Beispiel näher erläutert werden, ohne daß hierin eine Beschränkung zu sehen ist.

Beispiel

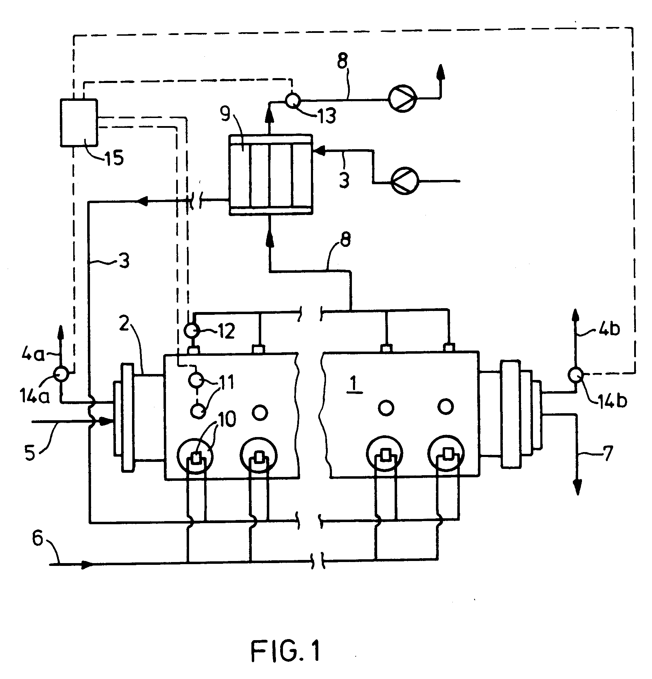

Das erfindungsgemäße Verfahren wird in einem Drehrohrofen, wie er in Fig. 1 abgebildet ist, durchgeführt. Durch Umsetzung von Flußspat mit Schwefelsäure in mehreren Stufen, wobei die letzte Stufe aus einem indirekt beheizten Drehrohr besteht, wird Flußsäure und Anhydrit hergestellt. Die zum Beheizen des Drehrohres erforderliche Energie wird im überwiegenden Maße durch Strahlung, im wesentlichen durch Heißgas- und/oder Festkörperstrahlung, zugeführt. Auf die beheizte Wand des Drehrohres (2) von ca. 14 m Länge (beheizte Länge ca. 12,5 m) und von ca. 2 m Durchmesser sind 6 Einzelbrenner I bis VI) in etwa gleichen Abständen gerichtet, welche die für das Drehrohr erforderliche Energie (ca. $3,0 \bullet 10^6$ kJ/h) in die gemeinsame, feuerfest (bis ca. 1400$^\circ$C) ausgemauerte Brennkammer (1) über Erdgas (6) und Luft (3) einbringen. Die Menge an Erdgas und Luft wird über (10) geregelt.

Ca. 1,9 t/h vorerhitzter Flußspat (ca. 420$^\circ$C; ca. 97 % $CaF_2$) und nahezu die stöchiometrische Menge an 98 %iger Schwefelsäure (ca. 2,45 t/h) werden über eine Zuleitung (5) in das Drehrohr (2) eingebracht.

Die HF-Gasabführung erfolgt im Gleichstromverfahren über eine Gasabführungsleitung (4b). [Gegenstromverfahren-Gasabführungsleitung (4a)].

Der Anhydrit wird ebenfalls am Ende des Ofens (7) abgenommen.

Der Energieverbrauch pro Durchsatzmenge wird minimiert: Das Temperaturprofil für die Drehrohrwand (11) wird am Ofeneinlauf mit 150$^\circ$C bis zum Ofenauslauf mit 300$^\circ$C festgelegt und geregelt (15), wobei beginnend am Ofeneinlauf Brenner I und II 20 % der Gesamtenergie, Brenner III und IV 38 % der Gesamtenergie und Brenner V und VI 42 % der Gesamtenergie übertragen. Die HF-Gastemperatur in der Abführung (14b) [bzw. (14a) im Gegenstromverfahren] beträgt 200$^\circ$C und die Rauchgastemperatur (13) in der Abführung (8) nach dem Wärmetauscher (9) 180$^\circ$C. Die Temperatur der Rauchgasteilströme kann bei Bedarf ebenfalls gemessen werden (12).

Die Ausbeute beträgt 98 % bezogen auf Flußspat. Die Analysenwerte der so hergestellten Flußsäure ohne Nachreinigung:

HF 99,9 %
$H_2O$ <0,05 %
$H_2SO_4$ <0,001 %
$SO_2$ <0,03 %

Der Abbrand enthält unter 1 % $CaF_2$ und unter 1 % Schwefelsäure.
Die Qualität des gleichzeitig anfallenden Anhydrits ist hinsichtlich Abbindezeit und Festigkeit hervorragend, so daß dieser als Estrich Verwendung finden kann.

**Patentansprüche**

1. Verfahren zur Herstellung von Flußsäure und Anhydrit durch Umsetzung von Flußspat mit Schwefelsäure in mehreren Stufen, wobei die letzte Stufe aus einem indirekt beheizten Drehrohr besteht, dadurch gekennzeichnet, daß diesem die zum Beheizen erforderliche Energie im überwiegenden Maße durch Strahlung zugeführt und von mehreren Einzelbrennern erzeugt wird, die längsseitig am Drehrohr angeordnet sind und in einem gemeinsamen Heizraum brennen, der im unteren Bereich als gemauerte Brennkammer ausgebildet ist, und daß jedem Einzelbrenner eine Rauchgasabführung zugeordnet ist und in dieser sowie in dem dazugehörenden Teil der Brennkammer die Temperatur laufend überwacht wird.

2. Verfahren nach Anspruch 1, dadurch gekennzeichnet, daß die Energie im wesentlichen durch Heißgas- und/oder Festkörperstrahlung auf das Drehrohr übertragen wird.

3. Verfahren nach Anspruch 1 oder 2, dadurch gekennzeichnet, daß jeder Einzelbrenner einzeln steuerbar ist.

4. Verfahren nach einem oder mehreren der Ansprüche 1 bis 3, dadurch gekennzeichnet, daß jeder Einzelbrenner an einen Rechner angeschlossen ist, der die Temperatur im Rauchgas und in der Brennkammer überwacht und die den Einzelbrennern zugeführte Brennstoffmenge nach vorgegebenen Temperatursollwerten steuert.

**Claims**

1. A process for tee production of hydrofluoric acid and anhydrite by reaction of fluorspar with sulfuric acid in several stages, the last stage comprising an indirectly heated rotary tube, characterized in that the energy required for heating is supplied to the rotary tube predominantly by radiation and is generated by several individual burners which are arranged longitudinally of the rotary tube and which burn in a common heating chamber of which the lower part is in the form of a refractorily lined combustion chamber and in that a waste-gas outlet is associated with each individual burner and the temperature in this waste-gas outlet and in the associated part of the combustion chamber is continuously monitored.

2. A process as claimed in claim 1, characterized in that the energy is supplied to the rotary tube substantially by hot-gas and/or solid-state radiation.

3. A process as claimed in claim 1 or 2, characterized in that each individual burner is separately controllable.

4. A process as claimed in one or more of claims 1 to 3, characterized in that each individual burner is linked to a computer which monitors the temperature in the waste gas and in the combustion chamber and controls the quantity of fuel supplied to the individual burners according to predetermined set temperature Values.

**Revendications**

1. Procédé de préparation d'acide fluorhydrique et d'anhydrite en faisant réagir du spath fluor avec de l'acide sulfurique en plusieurs étages dans lequel le dernier étage est constitué d'un tube rotatif à chauffage indirect, caractérisé en ce que l'énergie requise pour chauffer celui-ci est fournie principalement par rayonnement et est produite par plusieurs brûleurs séparés qui sont disposés longitudinalement par rapport au tube rotatif et qui fonctionnent dans une enceinte de chauffage commune, constituée dans sa partie inférieure par une chambre de combustion maçonnnée et en ce que, à chaque brûleur individuel, correspond une évacuation de gaz de combustion, tandis que la température est surveillée continuellement dans cette évacuation, ainsi que dans la partie correspondante de la chambre de combustion.

2. Procédé selon la revendication 1, caractérisé en ce que l'énergie est transmise essentiellement au tube rotatif par le rayonnement d'un gaz chaud et/ou d'un corps solide.

3. Procédé selon la revendication 1 ou 2, caractérisé en ce que chaque brûleur individuel peut être commandé séparément.

4. Procédé selon une ou plusieurs des revendications 1 à 3, caractérisé en ce que chaque brûleur individuel est raccordé à un ordinateur qui surveille la température dans les gaz de combustion et dans la chambre de combustion et qui contrôle les débits de combustibles amenés aux différents brûleurs en fonction des valeurs nominales prédéterminées de la température.

FIG.1